(19) Europäisches Patentamt
European Patent Office
Office européen des brevets

(11) **EP 4 222 923 B1**

(12) **EUROPEAN PATENT SPECIFICATION**

(45) Date of publication and mention
of the grant of the patent:
**19.06.2024 Bulletin 2024/25**

(21) Application number: **21785813.3**

(22) Date of filing: **27.09.2021**

(51) International Patent Classification (IPC):
**H04L 9/40** *(2022.01)*        **G06F 21/56** *(2013.01)*

(52) Cooperative Patent Classification (CPC):
**G06F 21/566; H04L 63/1441**

(86) International application number:
**PCT/EP2021/076482**

(87) International publication number:
**WO 2022/069401 (07.04.2022 Gazette 2022/14)**

(54) **MALWARE INFECTION MITIGATION OF CRITICAL COMPUTER SYSTEMS**

ABSCHWÄCHUNG VON SCHADPROGRAMMINFEKTIONEN IN KRITISCHEN COMPUTERSYSTEMEN

ATTÉNUATION D'INFECTION PAR LOGICIEL MALVEILLANT DE SYSTÈMES INFORMATIQUES CRITIQUES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2020 GB 202015374**

(43) Date of publication of application:
**09.08.2023 Bulletin 2023/32**

(73) Proprietor: **British Telecommunications public limited company**
**London E1 8EE (GB)**

(72) Inventors:
• **WANG, Xiao-Si**
**London EC4V 5BT (GB)**
• **HOCKING, Conor**
**London EC4V 5BT (GB)**

(74) Representative: **British Telecommunications public limited company**
**Intellectual Property Department**
**9th Floor**
**One Braham**
**Braham Street**
**London E1 8EE (GB)**

(56) References cited:
**WO-A1-2019/185404     WO-A1-2020/065737**

• **CHENXI WANG ET AL: "On computer viral infection and the effect of immunization", COMPUTER SECURITY APPLICATIONS, 2000. ACSAC '00. 16TH ANNUAL CONFERENC E NEW ORLEANS, LA, USA 11-15 DEC. 2000, LOS ALAMITOS, CA, USA,IEEE COMPUT. SOC, US, 11 December 2000 (2000-12-11), pages 246-256, XP010529822, DOI: 10.1109/ACSAC.2000.898879 ISBN: 978-0-7695-0859-7**

**Description**

The present invention relates to the propagating of malware across a set of computer systems and the automatic mitigation of the malware for critical computer systems.

Conventional malware protection mechanisms are reactive to the detection of malware in a network or the widespread distribution of anti-malware measures. Such approaches are known as "diagnosis and treatment". Similar techniques are used to combat the spread of biological infections. Mitigation measures such as anti-malware or malware-specific protective measures may not be known for some time after an infection has been studied for its effects. Further, the deployment of mitigation measures to an entire population of susceptible hosts in short order can be impractical and can involve rendering hosts unusable during the critical malware propagation period. In particular, critical computer systems such as computer systems the operation of which is of great importance, are beneficially maintained operational without disconnection or remediation (which can involve interruption) until a replacement, shadow or alternative critical system is available, even during a malware outbreak. Document WO2020/065737 discloses a method of malware propagation simulation for a computer network, wherein the model of the computer network is generated from the communication log among the nodes of the network.

Accordingly, it is beneficial to provide improvements to the deployment of protections for malware for critical computer systems.

According to a first aspect of the present invention, there is provided A computer implemented malware protection method to protect a target computer system in a set of computer systems from a malware, the method comprising: accessing a model of the set of computer systems, the model identifying interacting pairs of the computer systems in the set based on interactions corresponding to previous communication occurring between the computer systems in the pairs, and the model identifying the target computer system; simulating, over a plurality of time periods, a propagation of the malware originating from a predetermined source computer system in the model, the simulation being based on a number of interactions per time period between each interacting pair of computer systems in the set, and a rate of transmission of the malware per interaction; evaluating, for each of at least a subset of the time periods, a probability of infection of the target computer system in the time period; responsive to the simulating step, identifying an earliest time period during which the probability of infection of the target computer system meets a predetermined threshold probability; and triggering the deployment of malware protection measures in respect of the target computer system at a time period selected with reference to the identified time period so as to protect the target computer system from the malware.

Preferably, the simulating, evaluating and responsive to the simulating steps are repeated a plurality of times to establish the earliest time period during which the probability of infection of the target computer system exceeds the predetermined threshold probability with confidence intervals for selecting an earliest time period having a confidence meeting a threshold degree of confidence.

Preferably, deploying malware protection measures comprises provisioning a replacement computer system for the target computer system as a replica of the target computer system supplemented by the provision of protection measures such that the replacement computer system is protected from the malware, wherein the replacement computer system is provisioned in advance of the selected time period, the method further comprising deploying the replacement computer system as a substitute for the target computer system at the selected time period.

Preferably, malware protection measures include one or more of: an anti-malware facility; a malware filter; a malware detector; a block, preclusion or cessation of interaction; and a reconfiguration of one or more computer systems.

Preferably, the simulating step is performed a plurality of times for the source computer system and the responsive to the simulating step is responsive to the plurality of simulating steps.

Preferably, the simulating step is performed a plurality of times for each of multiple different source computer systems, and the responsive to the simulating step is responsive to the plurality of simulating steps.

Preferably, the number of interactions per time period between an interacting pair of computer systems is determined based on a statistical distribution such as a Poisson or uniform distribution.

Preferably, the number of interactions per time period between an interacting pair of computer systems in the set is defined based on historical records of interactions between the interacting pair of computer systems.

Preferably, the model further identifies a class of interaction between interacting pairs of computer systems, the class of interaction being determined based on historical records of interactions between each computer system in an interacting pair, and wherein the rate of transmission of the malware per interaction is determined for each interacting pair of computer systems based on the class of interaction for the interacting pair.

According to a second aspect of the present invention, there is a provided a computer system including a processor and memory storing computer program code for performing the steps of the method set out above.

According to a third aspect of the present invention, there is a provided a computer system including a processor and memory storing computer program code for performing the steps of the method set out above. The invention is disclosed in the appended claims.

Embodiments of the present invention will now be described, by way of example only, with reference to the accompanying drawings, in which:

Figure 1 is a block diagram a computer system suitable for the operation of embodiments of the present invention;
Figure 2 is a component diagram of an arrangement for malware protection for at least a subset of a set of computer systems according to an embodiment of the present invention;
Figure 3 is a flowchart of a malware protection method according to an embodiment of the present invention.

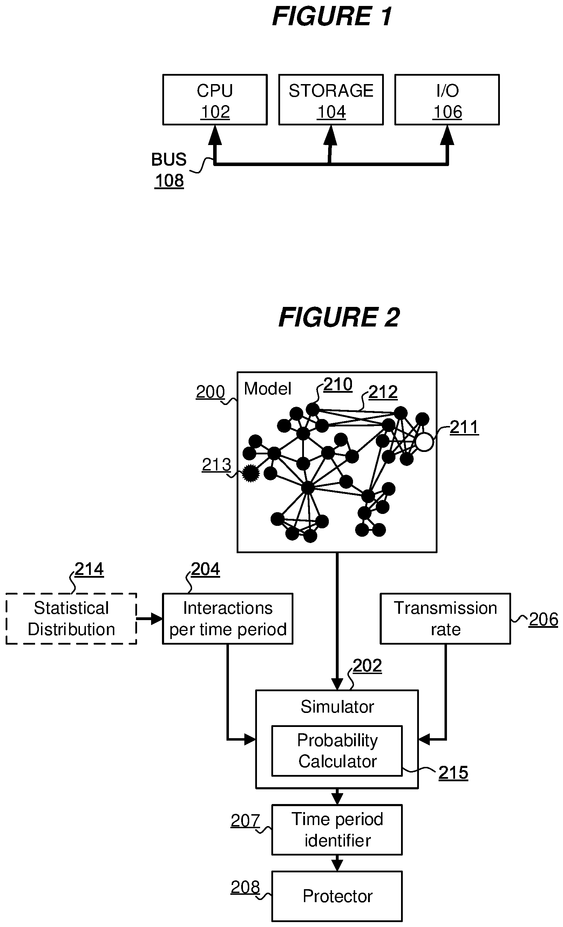

Figure 1 is a block diagram of a computer system suitable for the operation of embodiments of the present invention. A central processor unit (CPU) 102 is communicatively connected to a storage 104 and an input/output (I/O) interface 106 via a data bus 108. The storage 104 can be any read/write storage device such as a random-access memory (RAM) or a non-volatile storage device. An example of a non-volatile storage device includes a disk or tape storage device. The I/O interface 106 is an interface to devices for the input or output of data, or for both input and output of data. Examples of I/O devices connectable to I/O interface 106 include a keyboard, a mouse, a display (such as a monitor) and a network connection.

Malicious software, also known as computer contaminants or malware, is software that is intended to do direct or indirect harm in relation to one or more computer systems. Such harm can manifest as the disruption or prevention of the operation of all or part of a computer system, accessing private, sensitive, secure and/or secret data, software and/or resources of computing facilities, or the performance of illicit, illegal or fraudulent acts. Malware includes, inter alia, computer viruses, worms, botnets, trojans, spyware, adware, rootkits, keyloggers, dialers, malicious browser extensions or plugins and rogue security software.

Malware proliferation can occur in a number of ways. Malware can be communicated as part of an email such as an attachment or embedding. Alternatively, malware can be disguised as, or embedded, appended or otherwise communicated with or within, genuine software. Some malware is able to propagate via storage devices such as removable, mobile or portable storage including memory cards, disk drives, memory sticks and the like, or via shared or network attached storage. Malware can also be communicated over computer network connections such as the internet via websites or other network facilities or resources. Malware can propagate by exploiting vulnerabilities in computer systems such as vulnerabilities in software or hardware components including software applications, browsers, operating systems, device drivers or networking, interface or storage hardware.

A vulnerability is a weakness in a computer system, such as a computer, operating system, network of connected computers or one or more software components such as applications. Such weaknesses can manifest as defects, errors or bugs in software code that present an exploitable security weakness. An example of such a weakness is a buffer-overrun vulnerability, in which, in one form, an interface designed to store data in an area of memory allows a caller to supply more data than will fit in the area of memory. The extra data can overwrite executable code stored in the memory and thus such a weakness can permit the storage of malicious executable code within an executable area of memory. An example of such malicious executable code is known as 'shellcode' which can be used to exploit a vulnerability by, for example, the execution, installation and/or reconfiguration of resources in a computer system. Such weaknesses, once exploited, can bootstrap a process of greater exploitation of a target system, and propagation of the malware to other computer systems.

The effects of malware on the operation and/or security of a computer system lead to a need to identify malware in a computer system in order to implement protective and/or remedial measures. While malware detection is often directed to computer systems themselves or the networks over which they communicate, embodiments of the present invention recognise that interactions between computer systems transcend the physical interconnections therebetween. In particular, embodiments of the present invention are directed to addressing interactions between computer systems that arise from communication between pairs of computer systems. Such interactions can include, for example, interactions between users of each of a pair of computer systems using, inter alia, social media, messaging, electronic mail or file sharing facilities. Thus, embodiments of the present invention employ a model of a set of computer systems in which interacting pairs of computer systems are identified, such interactions being based on previous communication occurring between the computer systems in the pair. Notably, such a model disregards intermediates in an interaction - such as physical resources or other computer systems involved in a communication. For example, an interaction arising from a social media communication between two users using each of a pair of computer systems will involve potentially multiple physical or logical networks, intermediate servers, service provider hosts, intermediate communication appliances and the like. Thus, a model of the physical communication becomes burdened by the intermediate features of a typical inter-computer communication. In contrast, embodiments of the present invention address the endpoints of an interaction such as the computer systems through which users communicate. A similar analysis can be conducted for interactions involving email, electronic messaging, file sharing and the like.

Embodiments of the present invention are directed to the deployment of malware protection measures for a specific target computer system. Such target computer system can be, for example, inter alia, a critical computer system the operation of which is critical, a computer system storing sensitive data, a computer system the continuing availability of which is essential for operational or performance reasons, or the like. The deployment of malware protection measures to the target computer system is therefore sensitive to any non-availability of the target system that may arise due to the deployment or protection of the target system. For example, installation of malware protection measures can involve the temporary disconnection or cessation of network communications for the target system, a temporary cessation of operation of the target system, a reboot, restart or reconfiguration of the target system or the like, any or all of which may result in a period of non-availability of the target system. Embodiments of the present invention identify a time period during which the target system is at risk of impact by the malware with a probability exceeding a threshold degree of probability such that protective measures can be deployed with reference to the identified time period such as immediately before, or some time before, the time period so providing a continuation of the target system preceding such deployment. In one embodiment, during the continuation of the target system preceding such deployment, a replacement computer system is provisioned to replace the target computer system. Such replacement system can be a replica of the target computer system supplemented by the provision of protection measures such that the replacement computer system is protected from the malware. The replacement computer system can be provisioned in advance of the identified time period and deployed as a substitute for the target computer system at the selected time period. Accordingly, the targeted computer system can be permitted to continue its operation until the identified time period before being de-provisioned (e.g. deleted, switched off, disconnected or the like) and substituted by the replacement computer system. In this way, continuity of provision of any services, facilities and/or functions of the target computer system can be provided in spite of an active threat posed by a malware infection.

Embodiments of the present invention are based on a simulation of a propagation of malware through a model of a set of computer systems. Such simulation employs simulation parameters including: a rate of interaction between each interacting pair of computer systems (i.e. a number of interactions per time period); and a rate of transmission of the malware between interacting computer per interaction. In some embodiments, some or all of these parameters are derived statistically according to a statistical distribution. In some embodiments, some or all of these parameters are determined based on historical interaction information over a historical time period. In some embodiments, some or all of these parameters are determined based on one or more machine learning processes based on historical interaction information.

Figure 2 is a component diagram of an arrangement for malware protection for at least a subset of a set of computer systems according to an embodiment of the present invention. A model 200 is provided as one or more data structures representing a set of computer systems and interactions therebetween. Preferably, the model is provided as a graph or similar data structure including nodes or vertices 210, each corresponding to a computer system, and edges 212 each connecting a pair of nodes 210 and representing interaction between computer systems corresponding to each node in the pair. Thus, an edge 212 represents interaction between a pair of computer systems. Each node 210 can have associated information for a corresponding computer system including, for example, inter alia: an identifier of the computer system; an identification of an organisational affiliation of the computer system; an identifier of a subnet to which the computer system is connected; and other information as will be apparent to those skilled in the art. A target computer system 211 is indicated in the model 200. Further, one or more computer systems 213 as origins on a malware infection are similarly indicated.

Preferably, an edge 212 constitutes an indication that at least one interaction has taken place over at least a predetermined historic time period between computer systems in a pair. Preferably, the existence of an edge 212 is not determinative, indicative or reflective of a degree, frequency or propensity of interaction between computer systems in a pair - rather, the edge 212 identifies that interaction has taken place. In some embodiments, edges 212 can have associated, for example, inter alia: an edge identifier; an identification of a pair of nodes (and/or the corresponding computer systems) that the edge interconnects; and/or interaction frequency information between a pair of computer systems. It will be appreciated by those skilled in the art that, while the model 200 is illustrated as a literal graph in the arrangement of Figure 2, alternative data structures and logical representations of vertices and edges can be used, such as representations employing, for example, inter alia, vectors, arrays of vectors, matrices, compressed data structures and the like.

The arrangement of figure 2 includes a simulator 202 as a hardware, software, firmware or combination component arranged to perform a simulation of a propagation of a malware in the set of computer systems represented by the model 200. The simulator 202 is operable on the basis of simulation parameters including: an interaction rate 204 as a number of interactions between pairs of interacting computer systems in a time period; and a transmission rate 206 as a rate of transmission of a malware between computer systems in a pair of systems per interaction. Preferably, the transmission rate 206 is a probability of transmission of a malware from one node to another node during an interaction between the nodes. Preferably, the transmission rate 206 incorporates aspects of a malware infection process. For example, in the case of malware transmitted as a web-link between two computer systems by email, the transmission rate can reflect all of: a probability that an email is communicated between the two computer systems; a probability that the email includes the malicious web-link; and a probability that a recipient accesses the malicious web-link resulting in malware infection.

In one embodiment, the interactions rate 204 is sampled from one or more statistical distributions 214 to model different types of interaction. For example, a Poisson or uniform distribution can be used to model a number of interactions between a pair of computer systems over a time period, such as a number of emails communicated over the time period. In one embodiment, the transmission rate 206 is initialised in advance, such as by a predetermined value. For example, a transmission rate 206 having a value of 0.0001 is indicative of a probability that a first computer system in an interacting pair of computer systems transmits a malware to a second computer system in the pair within a single predetermined time period is 0.0001. In one embodiment, the interaction rate 204 between each of an interacting pair of computer systems in the set of computer systems is defined based on historical records of interactions between the computer systems.

In one embodiment, the model 200 further identifies a class of interaction between interacting pairs of systems based on historical records of interactions between each system in an interacting pair. In such embodiments, a rate of transmission of the malware per interaction is determined for each interacting pair of computer systems based on the class of interaction for the interacting pair.

The simulator 202 can operate on the basis of configurable characteristics such as simulation assumptions. For example, the simulator 202 may operate on the basis that any computer system as represented by a node in the model 200 can only transmit the malware to first-degree neighbours according to the model 200. Further, the simulator 202 preferably operates on the basis that each computer system has a state of infection at a point in time. States of infection at a point in time can include, for example: a state of susceptibility in which a computer system is susceptible to infection, such as a computer system that is not and has not been so far infected and is not specifically protected from infection by a particular malware; a state of infected in which a computer system is subject to infection by the malware at the point in time; and a state of removed or remediated in which a computer system is remediated of a past infection or protected from prospective infection by the malware. It will be appreciated by those skilled in the art that sub-states of these states can also be employed, such as, inter alia: an infected state that is not infectious (i.e. transmission of malware cannot be effected by a computer system in such a state); an infected state that is infectious; an infected state that is detected; and an infected state that is not detected (such as might be determined by the simulator 202).

Thus, in use, the simulator 202 is operable for a time period to model the propagation of a malware infection. In one embodiment, one or more predetermined source computer systems 213 represented in the model 200 are selected as originating computer systems for the malware infection such that propagation is simulated from such originating computer systems. The simulator 202 is executed for each of a plurality of time periods so as to model the propagation of the malware in the set of computer systems over time. Additionally or alternatively, the simulator 202 can be performed a plurality of times for each of a plurality of predetermined source computer systems selected as originating computer systems 213 for the malware infection.

According to one embodiment, where the transmission rate 206 is denoted as p, and the interaction rate 204 is denoted as c, the simulator 202 can model propagation of a malware by formulating an infection probability of a susceptible computer system indicated as node i by its infected neighbours:

*Considering $node_i$ where $i \in \{1, ..., n\}$ where n = number of nodes in the model, $node_i$ 's infectious neighbours $\mathbf{Nhb}_{i,j} = \{nhb_{i,1}, ... , nhb_{i,m(i)}\}$*

*where $j \in \{1, ..., m^{(i)}\}$ and $m^i \in \mathbb{N}$ is the number of neighbours of $node_i$*

*The corresponding set of interactions are $\mathbf{Inter}_{i,j} = \{c_{i,1}, ... , c_{i,m(i)}\}$.*

$$P(\mathbf{Nhb}_i \ infects \ node_i) = P(nhb_{i,1} infects \ node_i \ during \ any \ of \ their \ c_{i,1} \ interactions$$

$$= 1 - \prod_j P\big(nhb_{i,j} \ does \ not \ infect \ node_i \ during \ an \ interaction\big)^{c_{i,j}}$$

$$= 1 - \prod_j (1-p)^{c_{i,j}}$$

$$= 1 - (1-p)^{\sum_{j=1}^{m^{(i)}} c_{i,j}}$$

Thus, an exemplary model for the simulator 202 to model transitions of nodes 210 from a state of susceptible to infected and from infected to removed (i.e. remediated) can be:

| Probability of a node transitioning from a susceptible state to an infected state | $1 - (1 - p)^{\sum_{j=1}^{m^{(i)}} c_{i,j}}$ |
|---|---|
| Probability of a node in a susceptible state remaining in the susceptible state | $(1 - p)^{\sum_{j=1}^{m^{(i)}} c_{i,j}}$ |
| Probability of a node transitioning from an infected state to a removed state | $\theta_r$ |
| Probability of a node in an infected state remaining in the infected state | $1 - \theta_r$ |
| Probability of a node in the removed state remaining in the removed state | 1 |

where $\theta$ is a rate of removal/remediation.

The simulator 202 includes a probability calculator component 251 operable to evaluate a probability of infection of the target computer system 211 in each time period of the simulation. The probability calculator 215 can be operable across or on the basis of multiple executions of the simulator 202 to arrive at probabilities, for each time period, of infection of the target system 211. A time period identifier 207 component is a hardware, software, firmware or combination component operable to identify an earliest time period of the simulation during which a probability of infection of the target system 211 meets or exceeds a predetermined threshold. Such predetermined threshold is determined to be a probability at or above which the risk of infection of the target system 211 is considered too great to permit the continued operation of the target system 211 without protective measures. Thus, during time periods where the probability does not meet the threshold, operation of the target system 211 continues.

Responsive to the simulation by the simulator 202 and the identified earliest time period, a protector component 208 is operable to deploy malware protection measures intended to inhibit a propagation of the malware to the target system 211. The protector component 208 is a hardware, software, firmware or combination component arranged to access output from the time period identifier 207 to trigger the deployment of protective measures in respect of the target system 211 at a selected time period. The protector 208 selects the selected time period with reference the earliest time period identified by the time period identifier 207 such that the selected time period for deployment of protective measures occurs before the earliest time period so as to protect the target system 211 from the malware. Protections deployed with respect of the target system 211 can include protections deployed in or at the target system and protections deployed in other systems such as adjacent, connected or communicating systems or a replacement system as previously described. Protections can include, for example, inter alia: an anti-malware facility; a malware filter; a malware detector; a block, preclusion or cessation of interaction; and a reconfiguration of one or more computer systems.

In some embodiments the simulation, probability calculation and time period identification are performed repeatedly to establish a range of earliest time periods during which a probability of infection of the target system 211 meets the threshold probability so that a set of earliest time periods can be identified each associated with a confidence interval based on the multiple simulations. In such embodiments, the identified time period can be determined based on a threshold confidence, for example.

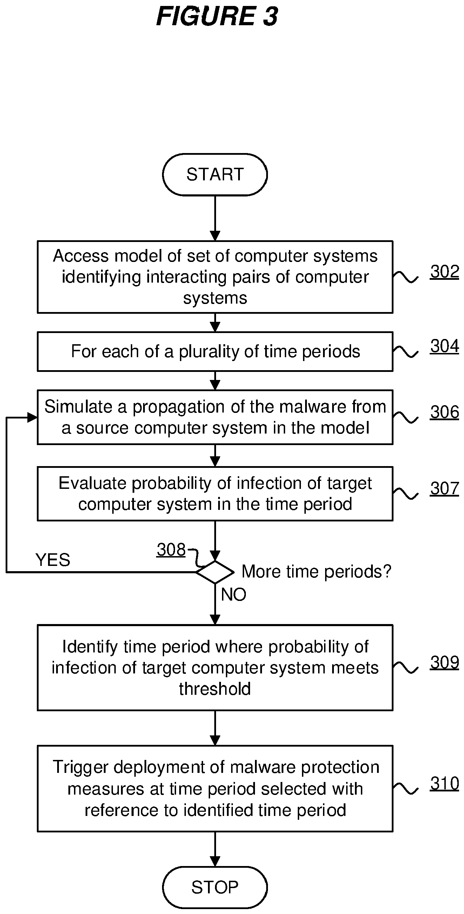

Figure 3 is a flowchart of a malware protection method according to an embodiment of the present invention. Initially, at step 302, the method accesses a model of a set of computer systems identifying interacting pairs of the computer systems based on interactions corresponding to previous communication occurring between the computer systems in the pair. At step 304 the method commences an iteration between each of a plurality of time periods for simulation. At step 306, for each simulated time period, the method simulates a propagation of a malware originating from a predetermined source computer system 213 in the model. The simulation is based on a number of interactions per time period 204 between each interacting pair of computer systems in the set, and a rate of transmission 206 of the malware per interaction. At step 307 the method evaluates a probability of infection of the target system 211 in the current time period. The method loops at step 308 through the time periods. Subsequently, at step 309, the method identifies a time period where the probability of infection of the target system 211 meets the threshold probability. At step 310 the method triggers deployment of malware protection measures for the target system 211 at a time period selected with reference to the identified time period.

Insofar as embodiments of the invention described are implementable, at least in part, using a software-controlled programmable processing device, such as a microprocessor, digital signal processor or other processing device, data processing apparatus or system, it will be appreciated that a computer program for configuring a programmable device, apparatus or system to implement the foregoing described methods is envisaged as an aspect of the present invention. The computer program may be embodied as source code or undergo compilation for implementation on a processing device, apparatus or system or may be embodied as object code, for example.

Suitably, the computer program is stored on a carrier medium in machine or device readable form, for example in solid-state memory, magnetic memory such as disk or tape, optically or magneto-optically readable memory such as compact disk or digital versatile disk etc., and the processing device utilises the program or a part thereof to configure it for operation. The computer program may be supplied from a remote source embodied in a communications medium such as an electronic signal, radio frequency carrier wave or optical carrier wave. Such carrier media are also envisaged as aspects of the present invention.

It will be understood by those skilled in the art that, although the present invention has been described in relation to the above described example embodiments, the invention is not limited thereto and that there are many possible variations and modifications which fall within the scope of the invention.

The scope of the present invention includes any novel features or combination of features disclosed herein. The applicant hereby gives notice that new claims may be formulated to such features or combination of features during prosecution of this application or of any such further applications derived therefrom. In particular, with reference to the appended claims, features from dependent claims may be combined with those of the independent claims and features from respective independent claims may be combined in any appropriate manner and not merely in the specific combinations enumerated in the claims.

## Claims

1. A computer implemented malware protection method to protect a target computer system in a set of computer systems from a malware, the method comprising:

   accessing a model of the set of computer systems, the model identifying interacting pairs of the computer systems in the set based on interactions corresponding to previous communication occurring between the computer systems in the pairs, and the model identifying the target computer system;
   simulating, over a plurality of time periods, a propagation of the malware originating from a predetermined source computer system in the model, the simulation being based on a number of interactions per time period between each interacting pair of computer systems in the set, and a rate of transmission of the malware per interaction;
   evaluating, for each of at least a subset of the time periods, a probability of infection of the target computer system in the time period;
   responsive to the simulating step, identifying an earliest time period during which the probability of infection of the target computer system meets a predetermined threshold probability; and
   triggering the deployment of malware protection measures in respect of the target computer system at a time period selected with reference to the identified time period so as to protect the target computer system from the malware.

2. The method of claim 1 wherein the simulating, evaluating and responsive to the simulating steps are repeated a plurality of times to establish the earliest time period during which the probability of infection of the target computer system exceeds the predetermined threshold probability with confidence intervals for selecting an earliest time period having a confidence meeting a threshold degree of confidence.

3. The method of any preceding claim wherein deploying malware protection measures comprises provisioning a replacement computer system for the target computer system as a replica of the target computer system supplemented by the provision of protection measures such that the replacement computer system is protected from the malware, wherein the replacement computer system is provisioned in advance of the selected time period, the method further comprising deploying the replacement computer system as a substitute for the target computer system at the selected time period.

4. The method of any preceding claim wherein malware protection measures include one or more of: an anti-malware facility; a malware filter; a malware detector; a block, preclusion or cessation of interaction; and a reconfiguration of one or more computer systems.

5. The method of any preceding claim wherein the simulating step is performed a plurality of times for the source computer system and the responsive to the simulating step is responsive to the plurality of simulating steps.

6. The method of any preceding claim wherein the simulating step is performed a plurality of times for each of multiple different source computer systems, and the responsive to the simulating step is responsive to the plurality of simulating steps.

7. The method of any preceding claim wherein the number of interactions per time period between an interacting pair of computer systems is determined based on a statistical distribution such as a Poisson or uniform distribution.

8. The method of any preceding claim wherein the number of interactions per time period between an interacting pair of computer systems in the set is defined based on historical records of interactions between the interacting pair of computer systems.

9. The method of any preceding claim wherein the model further identifies a class of interaction between interacting pairs of computer systems, the class of interaction being determined based on historical records of interactions between each computer system in an interacting pair, and wherein the rate of transmission of the malware per interaction is determined for each interacting pair of computer systems based on the class of interaction for the interacting pair.

10. A computer system including a processor and memory storing computer program code for performing the steps of the method of any preceding claim.

11. A computer program element comprising computer program code to, when loaded into a computer system and executed thereon, cause the computer system to perform the steps of a method as claimed in any of claims 1 to 9.

**Patentansprüche**

1. Computerimplementiertes Schadsoftware-Schutzverfahren zum Schützen eines Ziel-Computersystems in einem Satz von Computersystemen vor einer Schadsoftware, das Verfahren umfassend:

   Zugreifen auf ein Modell des Satzes von Computersystemen, wobei das Modell interagierende Paare der Computersysteme in dem Satz basierend auf Interaktionen korrespondierend mit vorheriger Kommunikation, die zwischen den Computersystemen in den Paaren erfolgt, identifiziert und wobei das Modell das Ziel-Computersystem identifiziert;
   Simulieren, über eine Vielzahl von Zeitperioden, einer Ausbreitung der Schadsoftware, die von einem im Voraus bestimmten Quellen-Computersystem in dem Modell ausgeht, wobei die Simulation auf einer Anzahl von Interaktionen pro Zeitperiode zwischen jedem interagierenden Paar von Computersystemen in dem Satz und einer Übertragungsrate der Schadsoftware pro Interaktion basiert;
   Bewerten, für jeden mindestens eines Teilsatzes der Zeitperioden, einer Wahrscheinlichkeit der Infektion des Ziel-Computersystems in der Zeitperiode;
   als Reaktion auf den Schritt des Simulierens Identifizieren einer frühesten Zeitperiode, während der die Wahrscheinlichkeit der Infektion des Ziel-Computersystems einer im Voraus bestimmten Schwellenwert-Wahrscheinlichkeit entspricht; und
   Auslösen des Einsatzes von Schadsoftware-Schutzmaßnahmen bezüglich des Ziel-Computersystems in einer unter Bezugnahme auf die identifizierte Zeitperiode ausgewählten Zeitperiode, um das Ziel-Computersystem vor der Schadsoftware zu schützen.

2. Verfahren nach Anspruch 1, wobei die Schritte des Simulieren, Bewertens und Reagierens auf das Simulieren eine Vielzahl von Malen wiederholt werden, um die früheste Zeitperiode zu ermitteln, während der die Wahrscheinlichkeit der Infektion des Ziel-Computersystems die im Voraus bestimmte Schwellenwert-Wahrscheinlichkeit übersteigt, wobei Konfidenzintervalle zum Auswählen einer frühesten Zeitperiode eine Konfidenz aufweisen, die einem Schwellenwertgrad der Konfidenz entspricht.

3. Verfahren nach einem der vorhergehenden Ansprüche, wobei Einsetzen von Schadsoftware-Schutzmaßnahmen umfasst, ein Ersatz-Computersystem für das Ziel-Computersystem als eine Nachbildung des Ziel-Computersystems bereitzustellen, ergänzt durch die Bereitstellung von Schutzmaßnahmen derart, dass das Ersatz-Computersystem vor der Schadsoftware geschützt ist, wobei das Ersatz-Computersystem vor der ausgewählten Zeitperiode bereitgestellt wird, das Verfahren ferner umfassend, das Ersatz-Computersystem als eine Substitution für das Ziel-Computersystem in der ausgewählten Zeitperiode einzusetzen.

4. Verfahren nach einem der vorhergehenden Ansprüche, wobei Schadsoftware-Schutzmaßnahmen eines oder mehrere von Folgendem enthalten: eine Anti-Schadsoftware-Einrichtung; einen Schadsoftware-Filter; einen Schadsoftware-Detektor; eine Sperrung, Verhinderung oder Beendigung der Interaktion; und eine Neukonfiguration eines oder mehrerer Computersysteme.

5. Verfahren nach einem der vorhergehenden Ansprüche, wobei der Schritt des Simulierens eine Vielzahl von Malen für das Quellen-Computersystem durchgeführt wird und die Reaktion auf den Schritt des Simulierens eine Reaktion auf die Vielzahl von Schritten des Simulierens ist.

6. Verfahren nach einem der vorhergehenden Ansprüche, wobei der Schritt des Simulierens eine Vielzahl von Malen für jedes von mehreren verschiedenen Quellen-Computersystemen durchgeführt wird und die Reaktion auf den Schritt des Simulierens eine Reaktion auf die Vielzahl von Schritten des Simulierens ist.

7. Verfahren nach einem der vorhergehenden Ansprüche, wobei die Anzahl von Interaktionen pro Zeitperiode zwischen einem interagierenden Paar von Computersystemen basierend auf einer statistischen Verteilung wie eine Poisson- oder Gleichverteilung bestimmt wird.

8. Verfahren nach einem der vorhergehenden Ansprüche, wobei die Anzahl von Interaktionen pro Zeitperiode zwischen einem interagierenden Paar von Computersystemen in dem Satz basierend auf historischen Aufzeichnungen von Interaktionen zwischen dem interagierenden Paar von Computersystemen definiert wird.

9. Verfahren nach einem der vorhergehenden Ansprüche, wobei das Modell ferner eine Klasse von Interaktionen zwischen interagierenden Paaren von Computersystemen identifiziert, wobei die Klasse von Interaktionen basierend auf historischen Aufzeichnungen von Interaktionen zwischen jedem Computersystem in einem interagierenden Paar bestimmt wird und wobei die Übertragungsrate der Schadsoftware pro Interaktion für jedes interagierende Paar von Computersystemen basierend auf der Klasse von Interaktionen für das interagierende Paar bestimmt wird.

10. Computersystem, enthaltend einen Prozessor und einen Speicher, der Computerprogrammcode zum Durchführen der Schritte des Verfahrens nach einem der vorhergehenden Ansprüche speichert.

11. Computerprogrammelement, umfassend Computerprogrammcode zum, wenn er in eines der Computersysteme geladen und darin ausgeführt wird, Veranlassen des Computersystems zum Durchführen der Schritte eines Verfahrens nach einem der Ansprüche 1 bis 9.


**Revendications**

1. Procédé de protection informatisée contre les logiciels malfaisants pour protéger un système informatique cible dans un ensemble de systèmes informatiques contre un logiciel malfaisant, ce procédé comprenant :

   l'accès à un modèle de l'ensemble de systèmes informatiques, ce modèle identifiant des paires en interaction des systèmes informatiques dans l'ensemble en se basant sur les interactions correspondant à une communication antérieure s'étant produite entre les systèmes informatiques dans les paires, et ce modèle identifiant le système informatique cible ;
   la simulation, pendant une pluralité de périodes de temps, d'une propagation du logiciel malfaisant provenant d'un système informatique source prédéterminé dans le modèle, cette simulation étant basée sur un nombre d'interactions par période de temps entre chaque paire en interaction de systèmes informatiques dans l'ensemble, et sur un taux de transmission du logiciel malfaisant par interaction ;
   l'évaluation, pour chacune d'au moins un sous-ensemble de périodes de temps, d'une probabilité d'infection du système informatique cible pendant cette période de temps ;
   en réponse à cette étape de simulation, l'identification d'une période de temps la plus antérieure pendant laquelle la probabilité d'infection du système informatique cible correspondait à une probabilité de seuil prédéterminée ; et
   le déclenchement du déploiement de mesures de protection contre les logiciels malfaisants relativement au système informatique cible à une période de temps sélectionnée en référence à la période de temps identifiée afin de protéger le système informatique cible contre le logiciel malfaisant.

2. Procédé selon la revendication 1, dans lequel la simulation, l'évaluation et la réponse aux étapes de simulation sont répétées une pluralité de fois pour établir la période de temps la plus antérieure pendant laquelle la probabilité d'infection du système informatique cible dépasse la probabilité de temps de seuil prédéterminée avec des intervalles de confiance pour sélectionner une période de temps la plus antérieure ayant une confiance correspondant à un degré de confiance de seuil.

**3.** Procédé selon l'une quelconque des revendications précédentes, dans lequel le déploiement des mesures de protection contre les logiciels malfaisants comprend la fourniture d'un système informatique de remplacement pour le système informatique cible comme une réplique du système informatique cible complétée par la fourniture de mesures de protection de sorte que le système informatique de remplacement est protégé contre le logiciel malfaisant, le système informatique de remplacement étant fourni en avance de la période de temps sélectionnée, ce procédé comprenant en outre le déploiement du système informatique de remplacement comme substitut pour le système informatique cible à la période de temps sélectionnée.

**4.** Procédé selon l'une quelconque des revendications précédentes, dans lequel les mesures de protection contre les logiciels malfaisants comprennent une ou plusieurs des mesures suivantes : un dispositif anti-logiciels malfaisants ; un filtre anti-logiciels malfaisants ; un détecteur de logiciels malfaisants ; un bloc, une exclusion ou une cessation d'interaction ; et une reconfiguration d'un ou de plusieurs systèmes informatiques.

**5.** Procédé selon l'une quelconque des revendications précédentes, dans lequel l'étape de simulation est exécutée une pluralité de fois pour le système informatique source et la réponse à l'étape de simulation est réceptive à la pluralité d'étapes de simulation.

**6.** Procédé selon l'une quelconque des revendications précédentes, dans lequel l'étape de simulation est exécutée une pluralité de fois pour chacun parmi plusieurs systèmes informatiques sources différents et la réponse à l'étape de simulation est réceptive à la pluralité d'étapes de simulation.

**7.** Procédé selon l'une quelconque des revendications précédentes, dans lequel le nombre d'interactions par période de temps entre une paire en interaction de systèmes informatiques est déterminé en se basant sur une distribution statistique telle qu'une distribution de Poisson ou une distribution uniforme.

**8.** Procédé selon l'une quelconque des revendications précédentes, dans lequel le nombre d'interactions par période de temps entre une paire en interaction de systèmes informatiques dans l'ensemble est défini en se basant sur des enregistrements historiques d'interactions entre la paire en interaction de systèmes informatiques.

**9.** Procédé selon l'une quelconque des revendications précédentes, dans lequel le modèle identifie en outre une classe d'interaction entre des paires en interaction de systèmes informatiques, la classe d'interaction étant déterminée en se basant sur des enregistrements historiques d'interactions entre chaque système informatique dans une paire en interaction, et dans lequel le taux de transmission du logiciel malfaisant par interaction est déterminé pour chaque paire en interaction de systèmes informatiques en se basant sur la classe d'interaction pour la paire en interaction.

**10.** Système informatique comprenant un processeur et une mémoire stockant un code de programme informatique pour exécuter les étapes du procédé selon l'une quelconque des revendications précédentes.

**11.** Élément de programme informatique comprenant un code de programme informatique pour, lorsqu'il est chargé dans un système informatique et exécuté sur celui-ci, fait exécuter à ce système informatique les étapes d'un procédé selon l'une quelconque des revendications 1 à 9.

# FIGURE 1

# FIGURE 2

# FIGURE 3

START

Access model of set of computer systems identifying interacting pairs of computer systems — 302

For each of a plurality of time periods — 304

Simulate a propagation of the malware from a source computer system in the model — 306

Evaluate probability of infection of target computer system in the time period — 307

YES

308 — More time periods?

NO

Identify time period where probability of infection of target computer system meets threshold — 309

Trigger deployment of malware protection measures at time period selected with reference to identified time period — 310

STOP

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020065737 A